# FASCICULE DE BREVET EUROPEEN

(11) **EP 0 632 960 B1**
(45) Date de publication et mention de la délivrance du brevet: **09.04.1997**
(21) Numéro de dépôt: 94420192.0
(22) Date de dépôt: 07.07.1994
(51) Int. Cl.: A22B 5/00

(54) **Dispositif pour le classement de carcasses de gros bovins, veaux, porcs ou ovins**
Vorrichtung zur Klassifizierung von Schlachtkörpern von Grossvieh, Kälbern, Schweinen oder Schafen
Apparatus for classifying carcasses of cattle, calf, pig or sheep

(30) Priorité: 09.07.1993 FR 9308727
(43) Date de publication de la demande: 11.01.1995
(73) Titulaire: NORMACLASS R.D., F-75116 Paris (FR)
(72) Inventeur: Kadi, Rachid, F-94500 Champigny Sur Marne (FR); Leclere, Jean, F-94000 Creteil (FR); Plusa, Janusz, F-94370 Sucy en Brie (FR)
(74) Mandataire: Maureau, Philippe

(56) Documents cités:
- EP-A- 0 321 981
- DE-A- 3 049 589
- FR-A- 2 462 205
- FR-A- 2 488 530
- FR-A- 2 608 899
- FR-A- 2 672 775

## Description

La présente invention a pour objet un dispositif pour le classement de carcasses de gros bovins, veaux, porcs ou ovins.

Il existe des différences importantes au niveau de la morphologie et de l'état d'engraissement des animaux d'une même espèce. Il convient donc, après abattage des animaux, de réaliser le classement des carcasses afin de déterminer, en fonction de la qualité de chacune d'elles, d'une part, le prix qui en sera payé à l'éleveur en amont, d'autre part, l'utilisation qui en sera faite en aval.

Ce classement intervient à la fin des chaînes d'abattage, c'est-à-dire après éviscération et préparation des animaux, sur des carcasses entières (veaux, ovins) ou sur des demi-carcasses (gros bovins, porcs) suspendues à une chaîne d'abattage avançant de façon continue ou par pas.

Dans le cas des gros bovins, deux critères indépendants ont été retenus pour réaliser le classement des carcasses : la conformation et l'état d'engraissement. Une grille descriptive communautaire, basée sur l'appréciation visuelle de ces deux critères, a été officialisée notamment par les règlements CEE du 28 Avril 1981 et du 12 Octobre 1981.

La conformation tient compte de la quantité de viande présente sur la carcasse, en fonction des dimensions de celle-ci. La conformation se détermine par l'appréciation des profils et des épaisseurs musculaires. Cinq classes ont été définies, chacune étant caractérisée par l'une des lettres du mot EUROP. La qualité de la conformation décroît de la classe E, qui correspond à une carcasse de conformation excellente avec des profils convexes et un excellent développement musculaire, jusqu'à la classe P qui correspond à une conformation médiocre, avec des profils concaves et un développement musculaire très réduit.

L'état d'engraissement s'apprécie en examinant la graisse de couverture, et la graisse présente sur la face interne des demi-carcasses à l'intérieur de la cage thoracique. Cinq classes ont été définies, chacune étant caractérisée par un chiffre de 1 pour un engraissement "très faible", à 5 pour un engraissement "très fort".

Chaque classe de conformation et d'état d'engraissement peut être subdivisée en 3 sous-classes (+, =, -) pour améliorer la précision du classement.

Actuellement, le classement des carcasses est réalisé par des opérateurs qui visualisent chaque carcasse et lui attribuent une classe ou sous-classe de conformation ainsi qu'une classe ou sous-classe d'état d'engraissement. Il faut toutefois considérer que ce mode de classement, bien que se référant à une grille officielle, présente un caractère subjectif puisqu'il dépend uniquement de l'appréciation visuelle faite par un opérateur soumis à des conditions variables de travail. Ceci entraîne des variations dans le classement d'une même carcasse par des opérateurs différents et dans des abattoirs différents.

Pour remédier à ces inconvénients, il a été imaginé d'utiliser des appareils susceptibles de fournir un classement, toujours selon la grille communautaire EUROP, qui soit moins subjectif et surtout uniforme dans le temps et sur les différents sites d'abattage.

A cet effet, il a été imaginé de réaliser des mesures de façon mécanique. La solution décrite dans les brevets français AUGE (79 19310, 80 17947), qui est limitée à l'appréciation du classement en conformation, ne donne pas satisfaction du fait qu'il faut immobiliser chaque carcasse à classer, amener à son contact un certain nombre d'éléments de mesure, tels que des palpeurs, lire les mesures et enfin la libérer des organes de mesure, ce qui peut être gênant pour suivre des cadences élevées.

Il existe également des dispositifs permettant de mesurer l'état d'engraissement, mettant en oeuvre une sonde qui doit être enfoncée dans les tissus en des sites déterminés de la carcasse et qui donne une mesure des épaisseurs de gras et de muscles traversées par la sonde (FAT-O-METER de SKF, HENNESSY). La mise en oeuvre manuelle est coûteuse et est incompatible avec des cadences élevées. La mise en oeuvre automatique est difficile à réaliser sachant que toutes les carcasses ne possèdent pas la même taille, et qu'elles avancent le long de la chaîne d'abattage.

Il existe des dispositifs de classement utilisant l'analyse d'images vidéo (PFISTER-SKG ; PETERSEN demande de brevet danois 6764/87) qui permettent de donner un classement en conformation par analyse du contour de certaines parties de la carcasse et un classement en engraissement par analyse du contraste observé entre gras et muscle. Ce dispositif étudié chez le porc pour donner une estimation de rendement en viande ne donne pas de résultats satisfaisants par rapport à la mesure réelle de rendement. Chez le gros bovin (brevet danois) dont la carcasse est plus complexe que celle du porc, le dispositif utilisé sous forme d'une cabine contenant une seule caméra ne permet pas de donner avec assez de précision le classement selon la grille communautaire EUROP et oblige à utiliser une sonde manuelle pour compléter les mesures vidéo.

Le brevet français 2 672 775 au nom de la Demanderesse fournit un procédé et un dispositif permettant de réaliser, de façon automatique et par mise en oeuvre de moyens de mesure qui ne viennent pas en contact physique avec les carcasses, le classement de carcasses d'animaux, directement sur la chaîne d'abattage, ce classement étant réalisé en conformation et en état d'engraissement.

Ce procédé consiste à stabiliser une demi-carcasse lors d'un arrêt de la chaîne de transport des demi-carcasses, à réaliser des positionnements angulaires de la carcasse par pivotement autour de son point de suspension, pour procéder à des prises de vues optiques sous différents angles, au niveau de l'arrière-train, de la cuisse, de la partie haute de l'échine, et de la partie avant de la demi-carcasse correspondant à la zone basse de celle-ci, à stocker les prises de vues dans la mémoire d'un calculateur qui prend en compte, au point d'arrêt précédent et pendant le transfert, les mesures de poids et de longueur de la demi-carcasse, à libérer cette dernière des surfaces sur lesquelles elle est en appui, puis à traiter les informations saisies en tenant compte d'informations de base pour réaliser le classement de la carcasse.

Les informations de base résultent de la synthèse d'informations recueillies préalablement en grand nombre et traitées statistiquement par rapport au classement de référence EUROP, ce qui permet de déterminer de façon parfaitement fidèle le classement de chaque carcasse par rapport à la grille EUROP.

Un dispositif pour la mise en oeuvre de ce procédé comprend un système d'appui pour la demi-carcasse se présentant sous la forme d'un dièdre délimité par deux surfaces séparées l'une de l'autre par une arête sensiblement verticale, l'une des faces du dièdre étant destinée à prendre appui contre la face coupée (interne) de la demi-carcasse, et l'autre face du dièdre étant destinée à prendre appui contre la face externe de la demi-carcasse, à proximité de la partie inférieure de cette dernière, le dièdre étant monté pivotant autour d'un axe vertical, et étant monté escamotable pour permettre, lors de l'arrivée d'une demi-carcasse, la mise en contact de celle-ci avec le dièdre puis, après prise de vues, I'échappement de la demi-carcasse vis-à-vis du dièdre pour permettre la poursuite du cheminement de cette dernière sur la chaîne d'abattage.

En pratique, la face du dièdre contre laquelle prend appui la demi-carcasse, est orientée parallèlement à la chaîne assurant le déplacement des demi-carcasses. Il en résulte la nécessité d'un bon guidage des demi-carcasses en amont du dièdre, par exemple à l'aide d'un tapis, pour éviter les risques de balancement de la demi-carcasse se traduisant par un passage de celle-ci derrière le dièdre. En outre, le procédé et le dispositif décrits dans ce brevet réalisent la mesure sur une demi-carcasse, et non pas sur les deux demi-carcasses d'une même carcasse, puisque les mesures sont effectuées par appui sur un dièdre disposé latéralement à la chaîne de transport et qui ne peut donc concerner que les demi-carcasses possédant une orientation déterminée. Or, il existe une variabilité des caractéristiques entre les deux demi-carcasses d'une même carcasse, pouvant dans certains cas conduire à une différence de classement d'une classe. Il existe également une variabilité importante entre les différents quartiers d'une demi-carcasse. Enfin, il existe des problèmes liés aux reflets d'éclairage, pouvant fausser la mesure.

Il est donc apparu avantageux de pouvoir procéder à des mesures sur les deux demi-carcasses d'une même carcasse.

Le but de l'invention est de fournir un dispositif mettant en oeuvre le procédé général défini dans le brevet français 2 672 775, permettant un débit de 150 carcasses à l'heure, en classant les carcasses à partir de données prises sur une seule ou sur les deux demi-carcasses, ce dispositif étant d'une structure simple, d'un fonctionnement fiable, et fournissant toutes les conditions d'hygiène requises dans le secteur industriel agro-alimentaire.

A cet effet, le dispositif qu'elle concerne, du type comprenant un système d'appui d'une demi-carcasse suspendue au transporteur d'une chaîne d'abattage, susceptible de réaliser l'orientation de la demi-carcasse autour de son point de suspension, un système de prise de vues disposé d'un côté du transporteur, un fond lumineux ou contrastant situé en face du système de prise de vues, de l'autre côté du transporteur, un système de traitement des vues et un système de commande, est caractérisé en ce que le système d'appui de chaque demi-carcasse comprend une colonne verticale, dont l'axe passe par l'axe du crochet du transporteur, entraînée en rotation par un motoréducteur, et associée à un mécanisme d'indexation de sa position angulaire, la colonne portant, diamétralement opposées, deux séries de butées d'appui pour une demi-carcasse, chaque butée comportant un support fixé sur la colonne servant au montage d'une barre horizontale formant la butée proprement dite.

En position de départ, la colonne est dans une position angulaire telle que les deux séries de butée sont perpendiculaires à l'axe du transporteur. Une première demi-carcasse arrive donc en appui contre les butées situées en amont dans le sens de déplacement du transporteur. La colonne pivote alors pour amener la demi-carcasse dans différentes positions angulaires assurant différentes prises de vues, ces prises de vues pouvant être identiques pour chacune des deux demi-carcasses d'une même carcasse, ou être différentes d'une demi-carcasse à une autre, afin de rechercher une complémentarité entre les mesures effectuées sur les deux demi-carcasses d'une même carcasse.

L'évacuation de la carcasse au contact des butées se fait après pivotement de la colonne d'un angle de 180°. Il est intéressant de noter que lorsqu'une carcasse est évacuée, l'autre série de butées se trouve en position d'attente pour recevoir la demi-carcasse suivante.

Selon une caractéristique de l'invention, les supports des butées situées d'un même côté de la colonne sont d'épaisseur variable, la butée la plus haute étant située plus près de la colonne que la butée la plus basse, ces différentes butées définissant un plan incliné de haut en bas, depuis la colonne vers l'extérieur de celle-ci.

La demi-carcasse se trouve donc en position légèrement inclinée, ce qui assure un bon appui sur les butées.

Afin de s'adapter au classement d'animaux de différentes tailles, les supports de butées sont montés réglables verticalement sur la colonne.

Avantageusement, au moins certaines des barres formant butées sont constituées par deux tronçons articulés autour d'un axe vertical à mi-longueur de la barre, et associés à un système de motorisation permettant leur pivotement entre une position où la barre est droite et une position dans laquelle la barre forme un V.

Cette dernière caractéristique est intéressante à mettre en oeuvre lorsque la surface qui vient en appui contre les butées est celle opposée à la face coupée.

Selon une autre caractéristique de l'invention, l'ensemble comportant la colonne verticale et son système d'entraînement est monté sur un châssis fixé de façon amovible sur une structure support scellée au sol.

Cet agencement permet, si besoin est, de déplacer l'ensemble comportant la colonne pour libérer le passage sous le dispositif de transfert des demi-carcasses, lorsque le dispositif ne fonctionne pas, par exemple pour réaliser sa maintenance.

Suivant une forme d'exécution, ce dispositif comprend un fond constitué par un panneau de couleur claire éclairé par des lampes montées derrière des caches disposés le long du panneau.

Suivant une autre forme d'exécution, ce dispositif comprend un fond constitué par un panneau de couleur sombre éclairé depuis l'extérieur par des lampes situées du même côté que les caméras de prise de vues.

Le panneau formant le fond peut être constitué par une surface continue ou par plusieurs surfaces superposées, parallèles et inclinées par rapport à la verticale, et éventuellement positionnées avec un angle par rapport à la chaîne d'abattage afin qu'elles soient disposées le plus orthogonalement possible par rapport aux caméras. Ces deux derniers agencements permettent d'éviter ou de limiter les réflexions parasites sur les caméras.

Avantageusement, le panneau formant fond lumineux ou contrastant comprend une ouverture, éventuellement obturable, destinée à laisser passer un système de lavage des butées.

Dans ce cas, le dispositif selon l'invention, comprend un système de lavage des butées, possédant autant de têtes de lavage qu'il y a de butées d'un côté de la colonne, montées décalées verticalement sur un même support, lui-même déplaçable transversalement au transporteur afin que chaque tête se déplace le long d'une butée située, par rapport à la colonne, du côté opposé au côté d'arrivée des demi-carcasses, chaque tête étant équipée de trois buses qui, décalées axialement et servant respectivement à l'amenée d'eau chaude, de vapeur d'eau et d'air, sont logées à l'intérieur d'un carter tubulaire fendu longitudinalement, destiné à s'engager sur une butée au cours du nettoyage de celle-ci.

Le lavage étant effectué au niveau des butées situées en aval dans le sens de déplacement du transporteur, ce lavage est réalisé en temps masqué, lors de l'amenée d'une demi-carcasse au contact de la série de butées disposées en amont. Ce nettoyage au cours de chaque cycle assure une hygiène parfaite, sans mise en oeuvre de produits de nettoyage spéciaux nécessitant un temps de séchage incompatible avec les cadences à respecter.

Suivant un mode de mise en oeuvre, l'eau chaude est à une température de 50 à 90°C sous 3 bars de pression, la vapeur est à 140°C sous 3 bars de pression et l'air est sous 6 bars de pression. La vapeur peut être avantageusement utilisée en mélange direct avec l'eau chaude dans le cas où la température de celle-ci est trop basse.

Avantageusement, le mécanisme de commande de l'alimentation des buses alimente pendant le déplacement "aller" de chaque tête la buse de vapeur, la buse d'eau chaude et éventuellement la buse d'air, et pendant le déplacement "retour" de celle-ci, la buse d'eau chaude, la buse de vapeur et la buse d'air.

Selon un mode simple de réalisation, le support des têtes de lavage est monté guidé en translation sur des colonnes horizontales et déplaçable à l'aide d'un vérin pneumatique.

Conformément à une autre caractéristique de l'invention, les caméras de prise de vues sont disposées à l'intérieur d'une armoire comportant une structure servant au montage des supports de caméras, cette armoire étant équipée d'une porte munie de fenêtres transparentes en regard des caméras, contenant un système de chauffage et éventuellement un climatiseur.

En outre, le dispositif selon l'invention comporte des moyens de contrôle du positionnement des demi-carcasses à l'entrée de l'ensemble de prise de vues, des moyens d'indexation du transporteur des demi-carcasses assurant un positionnement précis de chaque demi-carcasse au poste de prise de vues, et de détection de présence des demi-carcasses à chaque poste.

De toute façon, l'invention sera bien comprise à l'aide de la description qui suit, en référence au dessin schématique annexé, représentant, à titre d'exemple non limitatif, une forme d'exécution de ce dispositif :

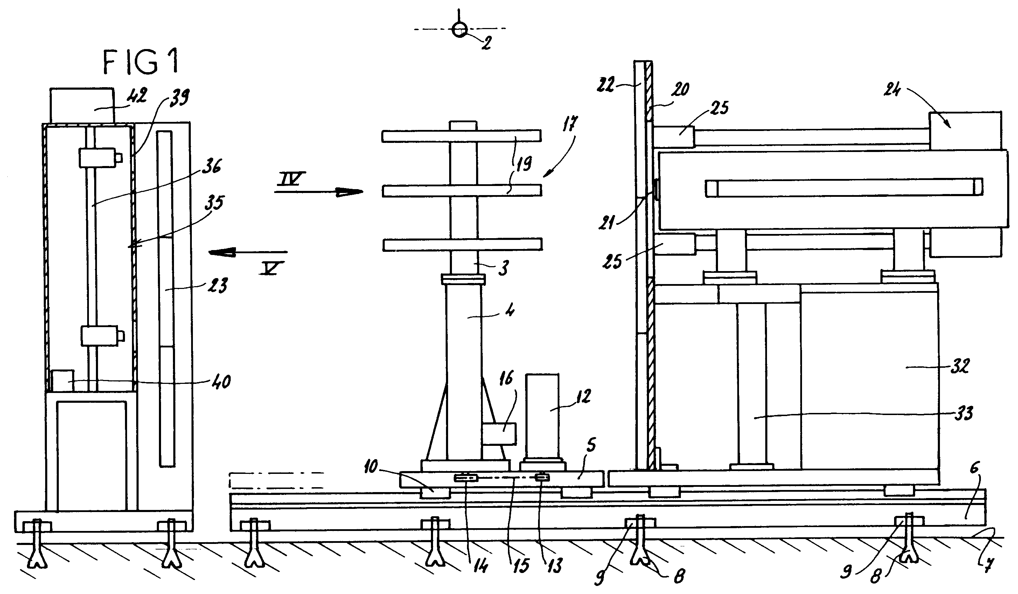

Figure 1 en est une vue de côté en coupe partielle, vue selon la direction de déplacement des demi-carcasses ;

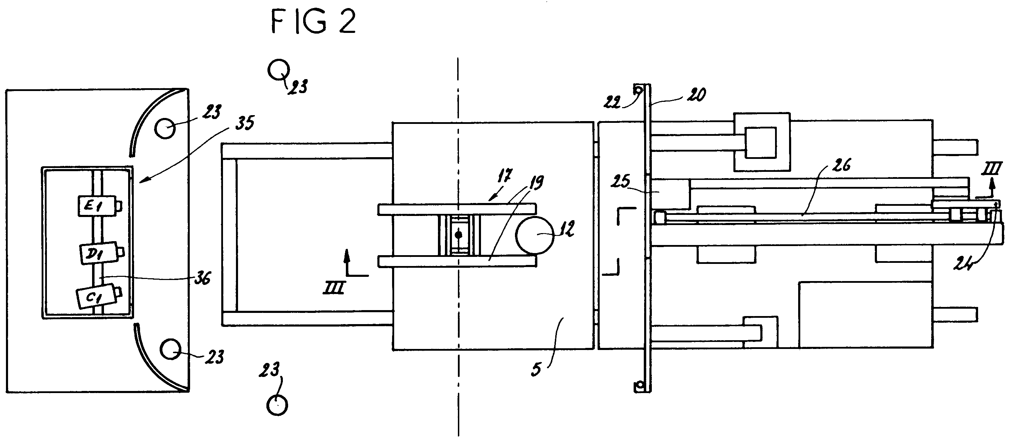

Figure 2 en est une vue de dessus ;
Figure 3 est une vue en coupe transversale selon la ligne III-III de figure 2 du dispositif de butée et du dispositif de lavage des butées ;
Figure 4 est une vue de face du fond lumineux selon la flèche 4 de figure 1 ;

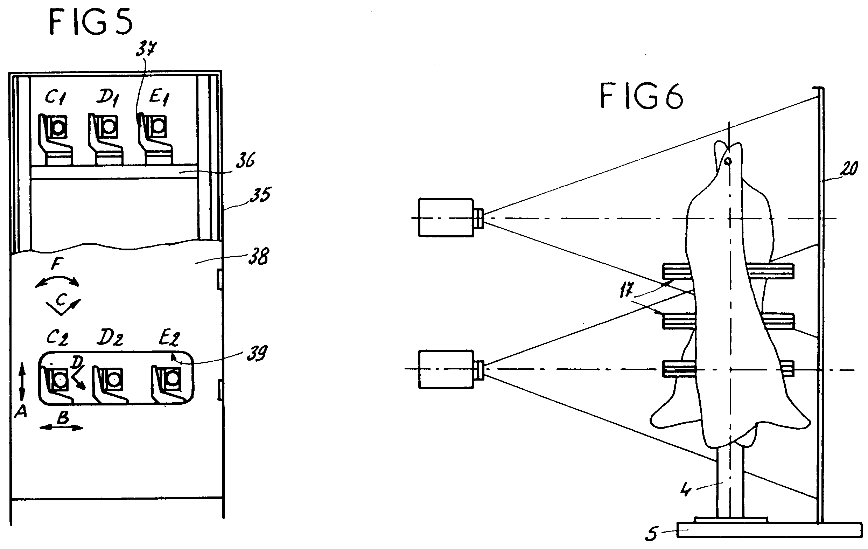

Figure 5 est une vue de face de l'armoire contenant les caméras selon la flèche 5 de figure 1 ;
Figure 6 est une vue de côté montrant le champ des caméras ;
Figures 7 à 14 sont huit vues illustrant un cycle de fonctionnement du dispositif ;
Figure 15 est une vue représentative du fonctionnement des différentes caméras au cours du cycle défini en référence aux figures 7 à 14.

Le dispositif selon l'invention est destiné à être inséré dans une installation de traitement de carcasses, telles que des carcasses de gros bovins, qui sont coupées longitudinalement en deux. Ces carcasses sont déplacées à l'aide d'un transporteur aérien, auquel les demi-carcasses sont suspendues à l'aide de crochets 2.

Le dispositif selon l'invention comprend une colonne verticale 3, dont l'axe passe par l'axe du transporteur auquel sont suspendus les crochets 2, et par l'axe du crochet. Cette colonne 3 est montée pivotante à l'intérieur d'un fût vertical 4. Cette colonne est montée sur un châssis 5, lui-même disposé sur une structure 6 fixée de façon définitive au sol 7 par l'intermédiaire de pattes de scellement 8 et de boulons 9. Le châssis 5 est monté sur la structure 6, par exemple par l'intermédiaire de glissières ou de roulettes 10, afin de pouvoir être déplacé pour être dégagé de la trajectoire de déplacement des demi-carcasses. La colonne 3 est entraînée en rotation à partir d'un motoréducteur électrique 12, la transmission de mouvements à partir du motoréducteur se faisant par des pignons 13, 14 et une chaîne 15. La colonne est immobilisée en rotation par un dispositif d'indexation 16, dans les différentes positions angulaires choisies, et l'angle de pivotement de la colonne est contrôlé par un codeur électronique. La colonne 3 porte deux séries de butées 17 diamétralement opposées. Chaque butée comprend un support 18 formant cale, monté directement sur la colonne 3, qui porte un tube 19 destiné à servir d'appui à la demi-carcasse.

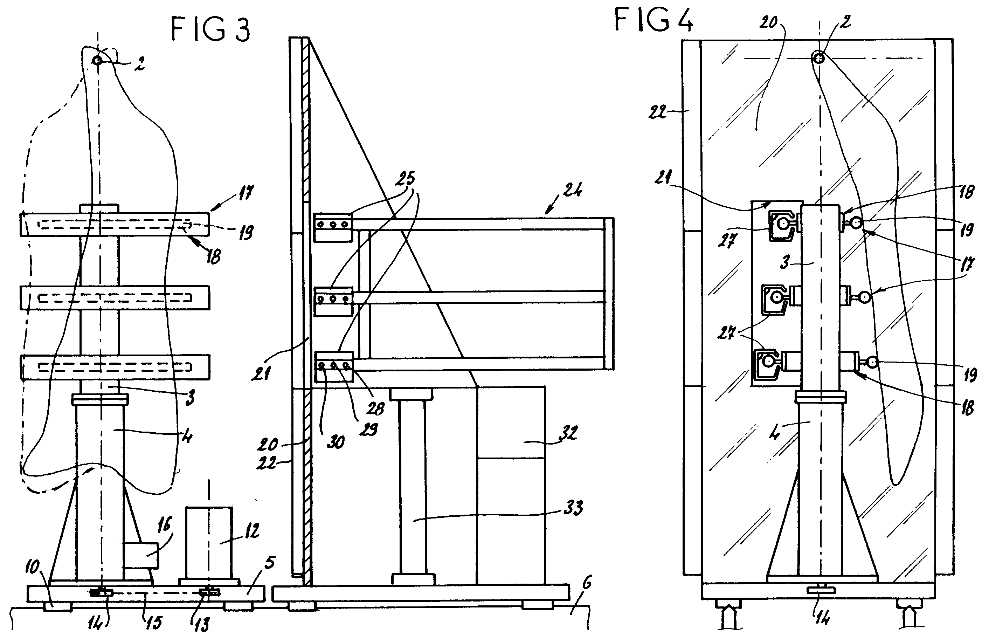

Comme montré notamment à la figure 4, les supports 18 sont d'épaisseur variable, cette épaisseur augmentant depuis le support de la butée la plus haute jusqu'au support de la butée la plus basse.

Toutefois, les trois tubes 19 sont situés dans un même plan incliné de haut en bas et de l'intérieur de la colonne vers l'extérieur de celle-ci, pour assurer un parfait appui de la carcasse lors de la prise de vues, comme montré à la figure 4. Les supports 18 formant cales peuvent être changés pour modifier cette inclinaison, et les supports 18 peuvent être réglés en hauteur sur la colonne afin de permettre à un même dispositif de servir pour des demi-carcasses de tailles très différentes les unes des autres, et d'être adapté aux populations de carcasses traitées dans les abattoirs.

En pratique, les demi-carcasses suspendues à des crochets 2 sont transférées au poste de prise de vues, chaque demi-carcasse prenant appui contre les butées 17 qui sont en position perpendiculaire à la direction du transfert. La colonne est ensuite entraînée en rotation, pour faire occuper à la carcasse différentes positions angulaires au cours desquelles sont réalisées des prises de vues.

Ce dispositif comprend également un fond lumineux ou contrastant possédant une armature de support, non détaillée au dessin, sur laquelle est fixé le fond 20 proprement dit, qui est constitué par une surface plane verticale, comme montré au dessin, ou qui pourrait être constitué par plusieurs surfaces superposées, parallèles les unes aux autres, et formant un angle faible par rapport à la verticale. Le fond 20 est de couleur claire, par exemple blanche, dans la mesure où il est associé à un éclairage de fond à l'aide de lampes 22 disposées sur le pourtour de la structure. Au contraire, le fond 20 est sombre, par exemple noir, dans la mesure où il est associé à un éclairage extérieur constitué par exemple par des lampes 23 disposées du côté des caméras de prise de vues. Dans sa partie centrale, le fond présente une ouverture 21, éventuellement obturable, destinée à laisser passer les têtes de lavage des butées 17.

Le dispositif de lavage est installé en arrière du fond et sert à laver alternativement les deux séries de butées, le lavage étant effectué sur la série de butées disposée en aval dans le sens de déplacement du dispositif de transport des demi-carcasses.

Ce dispositif comprend un support 24 pour trois têtes de lavage 25, positionnées verticalement à la même hauteur que les trois butées 17. Ce support est déplaçable transversalement à la direction de déplacement des demi-carcasses, en étant guidé sur des colonnes 26, et déplacé à l'aide d'un vérin pneumatique non représenté au dessin. Le support est déplaçable entre une position reculée dans laquelle l'ensemble est escamoté en arrière du fond lumineux 20, et une position dans laquelle les têtes de lavage sont disposées à l'extrémité des butées situées du côté opposé au fond 20. Chaque tête de lavage 25 comprend un carter 27 ayant un forme tubulaire fendue pour pouvoir s'engager autour de chaque butée, tout en autorisant le passage des supports 18.

A l'intérieur du carter 27 de chaque tête 25, débouchent trois buses destinées respectivement à projeter de l'eau chaude pour la buse 28, de la vapeur pour la buse 29 et de l'air pour la buse 30. L'eau chaude est entre 50°C et 90°C sous 3 bars de pression, la vapeur est à 140°C sous 3 bars de pression et l'air est sous une pression de 6 bars. L'alimentation des buses se fait par des tubulures montées à l'intérieur des profilés constitutifs du support 24, et la distribution est assurée à partir d'une armoire de commande 32, de telle sorte que lors du mouvement aller des têtes il se produise une projection de vapeur pour la désinfection et d'eau chaude pour le lavage, et qu'au cours du mouvement de retour les trois buses diffusent de l'eau chaude, de la vapeur et de l'air pour le séchage et le refroidissement.

Pendant l'opération de lavage, l'eau et la vapeur n'entrent pas en contact avec la viande de la demi-carcasse en appui contre les butées amont, du fait de la protection par le carter 27, qui assure également l'évacuation de l'eau et des déchets. En position de repos en arrière du fond 20, les têtes de lavage peuvent être abritées par un volet de protection, non représenté au dessin.

L'ensemble du système de lavage et du fond lumineux est monté sur un châssis 33 fixé de façon amovible sur la structure 6 commune au châssis 5 de la colonne 3 portant les butées 17.

De l'autre côté du transporteur, est disposée une armoire 35 contenant les caméras. A l'intérieur de cette armoire, est montée une structure 36 pour la fixation de supports 37 des caméras. Les caméras sont disposées selon deux niveaux et référencées C1, D1 et E1 pour celles du niveau supérieur et C2, D2 et E2 pour celles du niveau inférieur. L'armoire est obturée par une porte 38 présentant des fenêtres transparentes 39 en regard des caméras. Les supports de caméras sont mobiles verticalement et sont susceptibles d'un certain nombre de réglages, déplacement vertical A, déplacement horizontal B, rotation dans un plan horizontal C, rotation dans un plan vertical D, inclinaison F.

Les réglages verticaux et horizontaux s'effectuent par un déplacement et un blocage manuels. Les réglages en rotation sur une plage de plus ou moins 60° s'effectuent par une approche manuelle puis par un réglage fin micrométrique.

Les caméras C peuvent être utilisées pour la mesure de la longueur des demi-carcasses, pour réaliser des prises de vues des faces externes et internes des demi-carcasses pour l'ensemble des demi-carcasses, tandis que les caméras D et E sont destinées à prendre des vues des demi-carcasses sous certains angles choisis, au niveau de la cuisse, de l'échine, et de l'épaule.

Afin d'éviter tout risque de condensation à l'intérieur de l'armoire 35 contenant les caméras, celle-ci est équipée d'un dispositif de chauffage 40, qui peut être complété par un climatiseur 42 disposé au-dessus de l'armoire.

Ce dispositif comprend également un mécanisme de transfert adapté, pour chaque machine, en fonction de l'organisation de l'abattoir. Ce mécanisme commande trois arrêts en face de chaque station : attente, pesage, prise de vues.

Ce mécanisme comprend un système de contrôle du positionnement des demi-carcasses, et deux systèmes de contrôle de la présence des demi-carcasses.

Avant l'entrée de la machine, les demi-carcasses sont prépositionnées manuellement par un opérateur sur le dernier poste de travail de la chaîne. Elles sont systématiquement prépositionnées, de telle sorte que les côtés correspondant à la découpe des deux demi-carcasses d'un même animal soient en vis-à-vis, sensiblement perpendiculaires à la direction du transfert, avec une précision de plus ou moins 30°. Ces positions sont contrôlées par un détecteur de proximité installé au niveau du crochet de suspension. Les positions incorrectes sont signalées par un signal visuel ou sonore.

Les systèmes de contrôle de présence des demi-carcasses sont installés à la station de pesage et à la station de prise de vues. Ces dispositifs de contrôle sont installés à proximité du crochet de suspension, et la détection est basée sur la présence ou l'absence des demi-carcasses. Un dispositif d'indexage au niveau du crochet de suspension est prévu à la station de pesage et à la station de prise de vues pour assurer un parfait positionnement des demi-carcasses à ces deux postes.

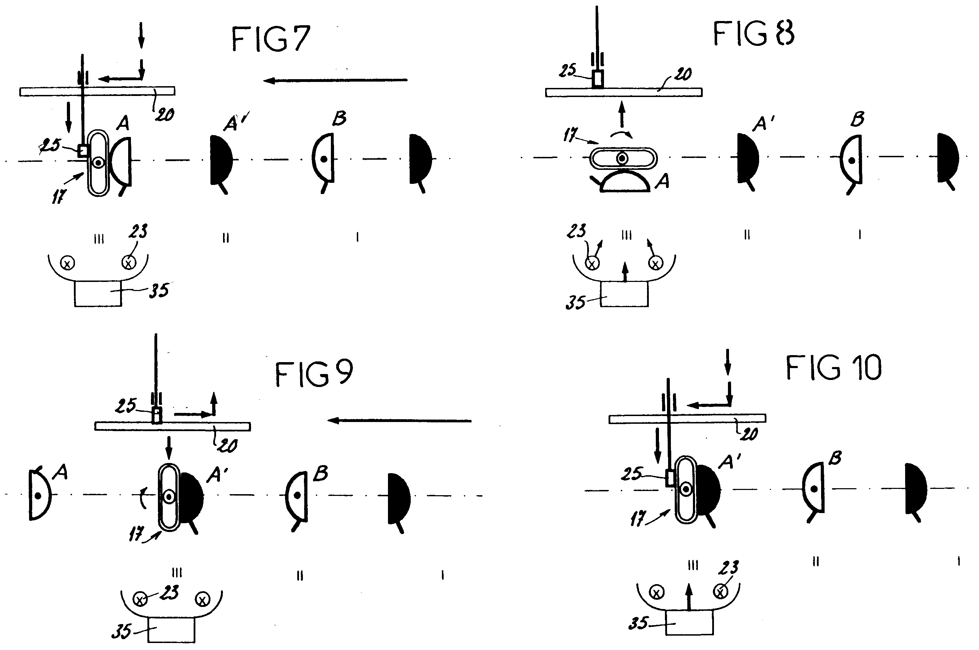

Les figures 7 à 14 représentent huit vues schématiques d'un cycle de fonctionnement du dispositif donné ci-après à titre d'exemple. Les postes I, II et III correspondent respectivement aux postes de positionnement des demi-carcasses, de pesage et de prise de vues.

Le dispositif d'avance des demi-carcasses est un dispositif d'avance par pas, le pas correspondant à l'écartement entre les postes I et II, et II et III respectivement.

A la figure 7, les butées se trouvent perpendiculaires à la direction de déplacement du transporteur, et les butées disposées en aval sont en cours de lavage. La demi-carcasse la plus en avant A arrive contre les butées situées en amont, et il est procédé à l'indexation de son crochet de suspension, tandis qu'il est procédé au pesage de la demi-carcasse correspondante A'.

A la figure 8, la butée a été débloquée, a pivoté de 90° pour présenter la face découpée vers les caméras, il est procédé à l'éclairage de la carcasse par les lumières 23, à la mesure de la longueur par la caméra C2, et à la prise de vue de l'intérieur de la carcasse par les caméras C1 et C2.

Comme montré à la figure 9, il est ensuite procédé à une rotation de 90° de la colonne portant les butées, au blocage de la butée après indexation et à la mise en fonctionnement du dispositif de transfert qui avance d'un pas pour évacuer la demi-carcasse A et amener la demi-carcasse A', qui est la demi-carcasse gauche, contre les butées.

Il est procédé, comme montré à la figure 10, au lavage des butées disposées en aval, au pesage de la demi-carcasse B, et à l'indexage du crochet de suspension de cette demi-carcasse.

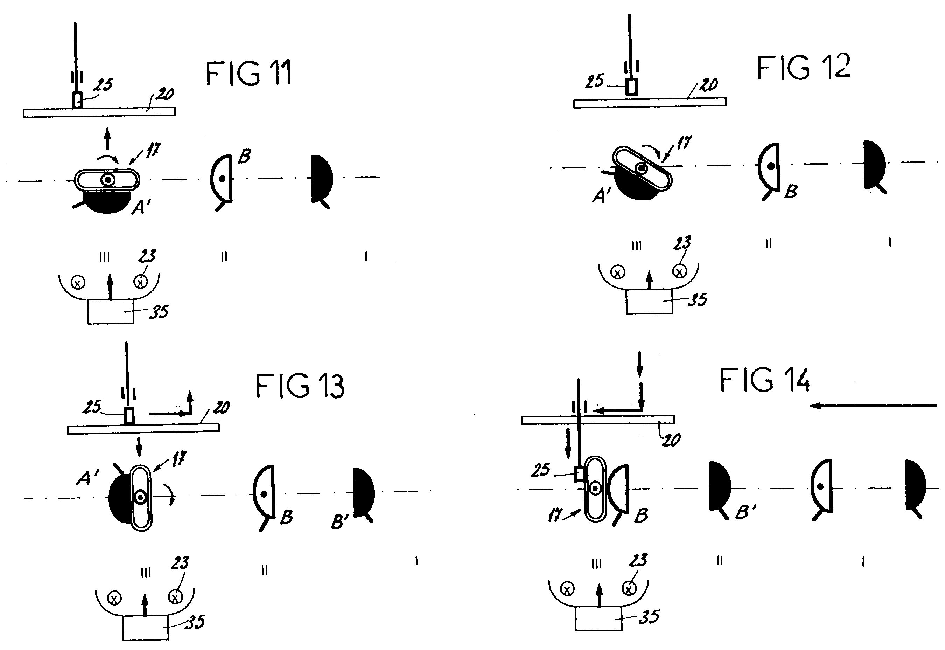

Comme montré à la figure 11, il est procédé au déblocage de la colonne portant les butées, à la rotation de cette colonne de 90°, à la mesure de la longueur, et aux prises de vues de l'extérieur de la carcasse à l'aide des caméras C1 et C2.

Il est ensuite procédé, comme montré à la figure 12, au pivotement de la colonne dans le sens des aiguilles d'une montre, d'un angle d'environ 40° avant prise de vue par les caméras D1 et D2.

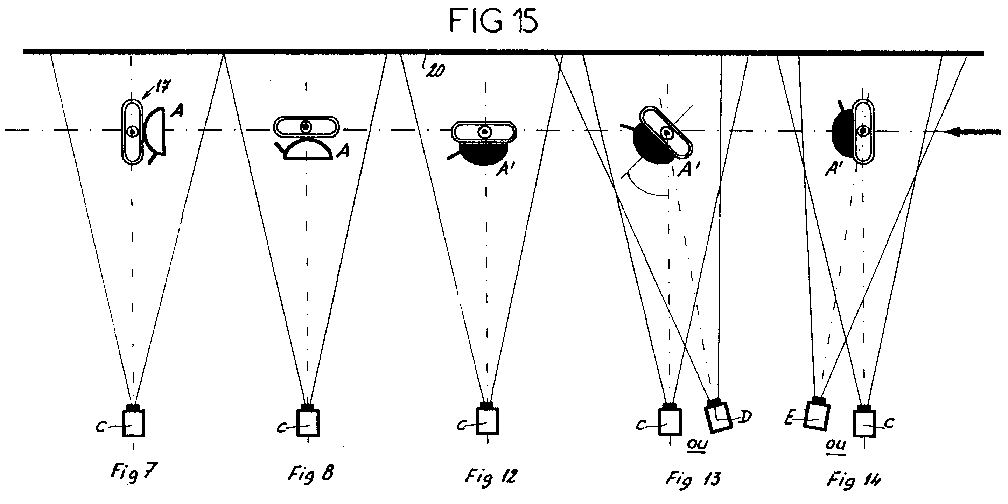

Comme montré à la figure 13, la rotation se poursuit jusqu'à atteindre 180° par rapport à la position de départ, la colonne est bloquée dans cette position avec retour d'indexage, il est procédé aux prises de vues à l'aide des caméras E1 et E2. Le dispositif de transfert est actionné d'un pas pour réaliser l'évacuation de la demi-carcasse A', correspondant à l'arrivée sur les butées amont d'une demi-carcasse B.

La figure 14 correspond au début d'un nouveau cycle identique à la situation de figure 7.

Les séquences qui ont été définies ci-dessus sont des exemples de prise de vues, étant précisé qu'il est possible de multiplier le nombre de prises de vues sur chaque demi-carcasse.

Comme il ressort de ce qui précède, l'invention apporte une grande amélioration à la technique existante en fournissant un dispositif de conception et de réalisation simple, présentant une grande fiabilité, et une parfaite hygiène d'utilisation.

Comme il va de soi, l'invention ne se limite pas à la seule forme d'exécution de ce dispositif, ni à la seule mise en oeuvre décrite ci-dessus à titres d'exemples, elle en embrasse au contraire toutes les variantes.

## Revendications

1. Dispositif pour le classement de carcasses de gros bovins, veaux, porcs ou ovins, du type comprenant un système d'appui d'une demi-carcasse suspendue au transporteur d'une chaîne d'abattage, susceptible de réaliser l'orientation de la demi-carcasse autour de son point de suspension, un système de prise de vues disposé d'un côté du transporteur, un fond (20) lumineux ou contrastant situé en face du système de prise de vues, de l'autre côté du transporteur, un système de traitement des vues et un système de commande, caractérisé en ce que le système d'appui de chaque demi-carcasse comprend une colonne (3) verticale, dont l'axe passe par l'axe du crochet (2) du transporteur, entraînée en rotation par un motoréducteur (12), et associée à un mécanisme d'indexation (16) de sa position angulaire, la colonne (3) portant, diamétralement opposées, deux séries de butées d'appui (17) pour une demi-carcasse, chaque butée comportant un support (18) fixé sur la colonne (3) servant au montage d'une barre horizontale (19) formant la butée proprement dite.

2. Dispositif selon la revendication 1, caractérisé en ce que les supports (18) des butées (17) situées d'un même côté de la colonne (3) sont d'épaisseur variable, la butée (17) la plus haute étant située plus près de la colonne (3) que la butée (17) la plus basse, ces différentes butées définissant un plan incliné de haut en bas, depuis la colonne (3) vers l'extérieur de celle-ci.

3. Dispositif selon l'une quelconque des revendications 1 et 2, caractérisé en ce que les supports (18) de butées sont montés réglables verticalement sur la colonne (3).

4. Dispositif selon l'une quelconque des revendications 1 à 3, caractérisé en ce qu'au moins certaines des barres (19) formant butées sont constituées par deux tronçons articulés autour d'un axe vertical à mi-longueur de la barre, et associés à un système de motorisation permettant leur pivotement entre une position où la barre est droite et une position dans laquelle la barre forme un V.

5. Dispositif selon l'une quelconque des revendications 1 à 4, caractérisé en ce que l'ensemble comportant la colonne verticale (3) et son système d'entraînement (12-15) est monté sur un châssis (5) fixé de façon amovible sur une structure support (6) scellée au sol.

6. Dispositif selon l'une quelconque des revendications 1 à 5, caractérisé en ce qu'il comprend un fond (20) constitué par un panneau de couleur claire éclairé par des lampes (22) montées derrière des caches disposés le long du panneau.

7. Dispositif selon l'une quelconque des revendications 1 à 5, caractérisé en ce qu'il comprend un fond (20) constitué par un panneau de couleur sombre éclairé depuis l'extérieur par des lampes (23) situées du même côté que les caméras de prise de vues.

8. Dispositif selon l'une quelconque des revendications 6 et 7, caractérisé en ce que le panneau (20) formant le fond est constitué par une surface continue.

9. Dispositif selon l'une quelconque des revendications 6 et 7, caractérisé en ce que le panneau formant le fond est constitué par plusieurs surfaces superposées, parallèles et inclinées par rapport à la verticale, et éventuellement positionnées avec un angle par rapport à la chaîne d'abattage, afin qu'elles soient disposées le plus orthogonalement possible par rapport aux caméras.

10. Dispositif selon l'une quelconque des revendications 6 à 9, caractérisé en ce que le panneau (20) comprend une ouverture (21), éventuellement obturable, destinée à laisser passer un système de lavage des butées (17).

11. Dispositif selon la revendication 10, caractérisé en ce qu'il comprend un système de lavage des butées (17), possédant autant de têtes de lavage (25) qu'il y a de butées (17) d'un côté de la colonne, montées décalées verticalement sur un même support (24), lui-même déplaçable transversalement au transporteur afin que chaque tête (25) se déplace le long d'une butée (17) située, par rapport à la colonne, du côté opposé au côté d'arrivée des demi-carcasses, chaque tête (25) étant équipée de trois buses (28, 29, 30) qui, décalées axialement et servant respectivement à l'amenée d'eau chaude, de vapeur d'eau et d'air, sont logées à l'intérieur d'un carter tubulaire (27) fendu longitudinalement, destiné à s'engager sur une butée au cours du nettoyage de celle-ci.

12. Dispositif selon la revendication 11, caractérisé en ce que l'eau chaude est à une température de 50°C à 90°C sous 3 bars de pression, la vapeur est à 140°C sous 3 bars de pression et l'air est sous 6 bars de pression.

13. Dispositif selon l'une quelconque des revendications 11 et 12, caractérisé en ce que l'armoire (32) de commande de l'alimentation des buses (28, 29) alimente pendant le déplacement "aller" de chaque tête la buse (29) de vapeur, la buse (28) d'eau chaude, et éventuellement la buse d'air (30), et pendant le déplacement "retour" de celle-ci, la buse d'eau chaude (28), la buse de vapeur (29) et la buse d'air (30).

14. Dispositif selon l'une quelconque des revendications 11 à 13, caractérisé en ce que le support (24) des têtes de lavage est monté guidé en translation sur des colonnes horizontales (26) et déplaçable à l'aide d'un vérin pneumatique.

15. Dispositif selon l'une quelconque des revendications 1 à 14, caractérisé en ce que les caméras de prise de vues (C1, C2, D1, D2, E1, E2) sont disposées à l'intérieur d'une armoire (35) comportant une structure (36) servant au montage des supports (37) de caméras, cette armoire étant équipée d'une porte (38) munie de fenêtres transparentes (39) en regard des caméras, contenant un système de chauffage (40) et éventuellement un climatiseur (42).

16. Dispositif selon l'une quelconque des revendications 1 à 15, caractérisé en ce qu'il comporte des moyens de contrôle du positionnement des demi-carcasses à l'entrée de l'ensemble de prise de vues, constitués par un détecteur de proximité installé à proximité du trajet des crochets de suspension des demi-carcasses et détectant l'orientation de ceux-ci.

17. Dispositif selon l'une quelconque des revendications 1 à 16, caractérisé en ce qu'il comprend des moyens d'indexation du transporteur des demi-carcasses, assurant un positionnement précis de chaque demi-carcasse au poste de prise de vues.

## Claims

1. A device for classifying carcasses of adult cattle, calves, pigs or sheep, of the type comprising a system for supporting a half-carcass suspended on the conveyor of an abattoir conveyor line, capable of orienting the half-carcass about its point of suspension, a photographic system disposed on one side of the conveyor, a bright or contrasting background (20) situated opposite the photographic system on the other side of the conveyor, a photographic processing system and a control system, characterised in that the system supporting each half-carcass comprises a vertical column (3), the axis of which passes through the axis of the conveyor hook (2), said column (3) being driven in rotation by a geared motor (12) and associated with a mechanism (16) for indexing its angular position and carrying, in diametrically opposed positions, two series of support abutments (17) for a half-carcass, each abutment comprising a support (18) fixed on the column (3) and serving in the mounting of a horizontal bar (19) forming the abutment proper.

2. A device according to claim 1, characterised in that the supports (18) of the abutments (17) situated on the same side of the column (3) are of variable thickness, the highest abutment (17) being situated closer to the column (3) than the lowest abutment (17), these different abutments defining a plane inclined from top to bottom, from the column (3) in an outward direction therefrom.

3. A device according to either one of claims 1 and 2, characterised in that the abutment supports (18) are mounted so as to be vertically adjustable on the column (3).

4. A device according to any one of claims 1 to 3, characterised in that at least certain of the bars (19) forming abutments consist of two sections articulated about a vertical axis half-way along the bar and associated with a motorising system enabling them to pivot between a position in which the bar is straight and a position in which the bar forms a V.

5. A device according to any one of claims 1 to 4, characterised in that the assembly comprising the vertical column (3) and its drive system (12-15) is mounted on a frame (5) fixed movably to a support structure (6) fixed to the ground.

6. A device according to any one of claims 1 to 5, characterised in that it comprises a background (20) consisting of a light-coloured panel lit by lamps (22) mounted behind screens disposed along the panel.

7. A device according to any one of claims 1 to 5, characterised in that it comprises a background (20) consisting of a dark-coloured panel lit from outside by lamps (23) situated on the same side as the photographic cameras.

8. A device according to either one of claims 6 and 7, characterised in that the panel (20) forming the background consists of a continuous surface.

9. A device according to either one of claims 6 and 7, characterised in that the panel forming the background consists of a plurality of parallel superposed surfaces inclined with respect to the vertical and optionally positioned at an angle with respect to the abattoir conveyor line, so that they are disposed as orthogonally as possible with respect to the cameras.

10. A device according to any one of claims 6 to 9, characterised in that the panel (20) comprises an optionally closable opening (21) designed to allow the passage of a system for washing the abutments (17).

11. A device according to claim 10, characterised in that it comprises a system for washing the abutments (17) comprising the same number of washing heads (25) as there are abutments (17) on one side of the column, said heads being mounted in vertically offset arrangement on a single support (24) which is itself displaceable transversely with respect to the conveyor so that each head (25) moves along an abutment (17) situated, with respect to the column, on the opposite side from the half-carcass arrival side, each head (25) being equipped with three nozzles (28, 29, 30) which, offset axially and serving respectively to supply hot water, steam and air, are accommodated inside a longitudinally slit tubular casing (27) designed to engage with an abutment during cleaning thereof.

12. A device according to claim 11, characterised in that the hot water is at a temperature of from 50°C to 90°C under 3 bar of pressure, the steam is at 140°C under 3 bar of pressure and the air is under 6 bar of pressure.

13. A device according to either one of claims 11 and 12, characterised in that the control box (32) for controlling supply of the nozzles (28, 29) supplies the steam nozzle (29), the hot water nozzle (28) and optionally the air nozzle (30) during the "outward" movement of each head and the hot water nozzle (28), the steam nozzle (29) and the air nozzle (30) during the "return" movement thereof.

14. A device according to any one of claims 11 to 13, characterised in that the washing head support (24) is mounted such that it is guided translationally on horizontal columns (26) and is displaceable by means of an air jack.

15. A device according to any one of claims 1 to 14, characterised in that the photographic cameras (C1, C2, D1, D2, E1, E2) are arranged inside a box (35) comprising a structure (36) serving in the mounting of camera supports (37), this box being equipped with a door (38) provided with transparent windows (39) opposite the cameras and containing a heating system (40) and optionally an air-conditioning unit (42).

16. A device according to any one of claims 1 to 15, characterised in that it comprises means for controlling the positioning of the half-carcasses at the entry to the photographic assembly, said means consisting of a proximity detector installed in the vicinity of the path of the half-carcass suspension hooks and detecting the orientation thereof.

17. A device according to any one of claims 1 to 16, characterised in that it comprises indexing means for the half-carcass conveyor, ensuring precise positioning of each half-carcass at the point of photographing.

## Patentansprüche

1. Vorrichtung für die Klassifizierung von Rümpfen von Großrindern, Kälbern, Schweinen oder Schafen, umfassend ein System zur Anlage eines an die Fördereinrichtung einer Schlachtungskette aufgehängten Halb-Rumpfs, welches zum Durchführen der Orientierung des Halb-Rumpfs um seine Aufhängstelle herum geeignet ist, ein auf einer Seite der Fördereinrichtung angeordnetes Aufnahmesystem, ein auf der anderen Seite der Fördereinrichtung vor dem Aufnahmesystem angeordneter Leucht- oder Kontrasthintergrund (20), ein System zur Verarbeitung der Ansichten und ein Steuersystem, dadurch gekennzeichnet, daß das System zur Anlage jedes Halb-Rumpfs eine vertikale Säule (3) umfaßt, deren Achse durch die Achse des Hakens (2) der Fördereinrichtung führt, wobei diese durch einen Getriebemotor (12) drehangetrieben ist und mit einem Mechanismus (16) zur Festlegung ihrer Winkelstellung verbunden ist, und wobei die Säule (3) zwei diametral entgegengesetzte Reihen von Anlageanschlägen (17) für einen Halb-Rumpf trägt, wobei jeder Anschlag einen an der Säule (3) befestigten Halter (18) umfaßt, welcher zur Montage eines horizontalen Stabs (19) dient, der den eigentlichen Anschlag bildet.

2. Vorrichtung nach Anspruch 1, dadurch gekennzeichnet, daß die auf einer gemeinsamen Seite der Säule (3) gelegenen Halter (18) der Anschläge (17) in ihrer Dicke variabel sind, wobei der höchste Anschlag (17) näher an der Säule (3) gelegen ist als der tiefste Anschlag (17), und wobei diese verschiedenen Anschläge eine von der Säule (3) aus in Richtung nach außen und von oben nach unten geneigte Ebene definieren.

3. Vorrichtung nach einem der Ansprüche 1 und 2, dadurch gekennzeichnet, daß die Halter (18) der Anschläge vertikal einstellbar an der Säule (3) angebracht sind.

4. Vorrichtung nach einem der Ansprüche 1 bis 3, dadurch gekennzeichnet, daß wenigstens einige der Anschläge bildenden Stäbe (19) durch zwei Teilstücke gebildet sind, welche um eine vertikale Achse auf halber Länge des Stabs herum schwenkbar sind, und mit einem Antriebsssystem verbunden sind, welches ihr Schwenken zwischen einer Stellung, in der der Stab gerade ist, und einer Stellung, in welcher der Stab ein V bildet, erlaubt.

5. Vorrichtung nach einem der Ansprüche 1 bis 4, dadurch gekennzeichnet, daß die die vertikale Säule (3) und ihr Antriebssystem (12 - 15) umfassende Einheit an einem Gestell (5) angebracht ist, welches beweglich auf einer am Boden verankerten Tragstruktur (6) angebracht ist.

6. Vorrichtung nach einem der Ansprüche 1 bis 5, dadurch gekennzeichnet, daß sie einen Hintergrund (20) umfaßt, welcher durch eine Platte hellen Farbtons gebildet ist, die durch Lampen (22) beleuchtet ist, welche hinter Abdeckungen angebracht sind, welche längs der Platte angeordnet sind.

7. Vorrichtung nach einem der Ansprüche 1 bis 5, dadurch gekennzeichnet, daß sie einen Hintergrund (20) umfaßt, welcher durch eine Platte dunklen Farbtons gebildet ist, der von außen durch Lampen (23) beleuchtet ist, welche auf der gleichen Seite angeordnet sind wie die Aufnahmekameras.

8. Vorrichtung nach einem der Ansprüche 6 und 7, dadurch gekennzeichnet, daß die den Hintergrund bildende Platte (20) durch eine kontinuierliche Fläche gebildet ist.

9. Vorrichtung nach einem der Ansprüche 6 und 7, dadurch gekennzeichnet, daß die den Hintergrund bildende Platte durch mehrere überlagerte Flächen gebildet ist, welche parallel sind und schräg zur Vertikalen verlaufen, und gegebenenfalls mit einem Winkel relativ zur Schlachtungskette angeordnet sind, um sie möglichst orthogonal relativ zu den Kameras anzuordnen.

10. Vorrichtung nach einem der Ansprüche 6 bis 9, dadurch gekennzeichnet, daß die Platte (20) eine gegebenenfalls verschließbare Öffnung (21) aufweist, welche dazu bestimmt ist, ein System zum Waschen der Anschläge (17) durchtreten zu lassen.

11. Vorrichtung nach Anspruch 10, dadurch gekennzeichnet, daß sie ein System zum Waschen der Anschläge (17) umfaßt, welches ebenso viele Waschköpfe (25) besitzt wie Anschläge (17) auf einer Seite der Säule vorgesehen sind, und zwar vertikal versetzt an einem gemeinsamen Träger (24) angebracht, welcher selbst quer zur Fördereinrichtung derart verlagerbar ist, daß jeder Kopf (25) sich längs eines Anschlags (17) verlagert, welcher relativ zur Säule auf der der Seite der Ankunft der Halb-Rümpfe entgegengesetzten Seite angeordnet ist, wobei jeder Kopf (25) mit drei axial versetzten und zur Zufuhr heißen Wassers bzw. Wasserdampfs bzw. Luft dienenden Düsen (28, 29, 30) ausgestattet ist, welche im Inneren eines in Längsrichtung geschlitzten rohrförmigen Gehäuses (27) untergebracht sind, welches dazu bestimmt ist, einen Anschlag während der Reinigung desselben zu umgreifen.

12. Vorrichtung nach Anspruch 11, dadurch gekennzeichnet, daß das heiße Wasser eine Temperatur von 50°C bis 90°C bei einem Druck von 3 bar aufweist, der Dampf 140°C bei einem Druck von 3 bar aufweist und die Luft einen Druck von 6 bar aufweist.

13. Vorrichtung nach einem der Ansprüche 11 und 12, dadurch gekennzeichnet, daß der Steuerschrank (32) zur Versorgung der Düsen (28, 29) während der "Hin"-Verlagerung jedes Kopfes die Düse (29) für Dampf, die Düse (28) für heißes Wasser und gegebenenfalls die Düse (30) für Luft versorgt und während der "Zurück"-Verlagerung desselben die Düse (28) für heißes Wasser, die Düse (29) für Dampf und die Düse (30) für Luft versorgt.

14. Vorrichtung nach einem der Ansprüche 11 bis 13, dadurch gekennzeichnet, daß der Träger (24) der Waschköpfe an horizontalen Säulen (26) verschieblich geführt angebracht ist und mittels eines pneumatischen Stellantriebs verlagerbar ist.

15. Vorrichtung nach einem der Ansprüche 1 bis 14, dadurch gekennzeichnet, daß die Aufnahmekameras (C1, C2, D1, D2, E1, E2) im Inneren eines Schranks (35) angeordnet sind, welcher einen zur Anbringung von Kameraträgern (37) dienenden Aufbau (36) aufweist, wobei dieser Schrank mit einer Tür (38) ausgestattet ist, welche mit für die Kameras transparenten Fenstern (39) versehen ist, ein Heizsystem (40) und gegebenenfalls eine Klimaanlage (42) enthält.

16. Vorrichtung nach einem der Ansprüche 1 bis 15, dadurch gekennzeichnet, daß sie Mittel zum Kontrollieren der Positionierung der Halb-Rümpfe am Eingang der Aufnahmeeinheit umfaßt, welche durch einen Näherungsdetektor gebildet sind, welcher in der Nähe der Bahn der Haken zur Aufhängung der Halb-Rümpfe installiert ist und die Orientierung derselben erfaßt.

17. Vorrichtung nach einem der Ansprüche 1 bis 16, dadurch gekennzeichnet, daß sie Mittel zur Festlegung der Fördereinrichtung für die Halb-Rümpfe umfaßt, welche eine genaue Positionierung jedes Halb-Rumpfs an der Aufnahmestelle gewährleisten.
